# EUROPEAN PATENT APPLICATION

(11) **EP 4 093 031 A1**
(43) Date of publication of application: **23.11.2022**
(21) Application number: 21871144.8
(22) Date of filing: 17.08.2021
(51) Int. Cl.: H04N 21/2187, H04N 21/431, H04N 21/472

(54) **LIVESTREAMING ROOM DATA EXCHANGE METHOD AND APPARATUS**

(30) Priority: 27.09.2020 CN 202011033500
(71) Applicant: Beijing Dajia Internet Information Technology Co., Ltd., Beijing 100085 (CN)
(72) Inventor: TANG, Xiao, Beijing 100085 (CN)
(74) Representative: Sadler, Peter Frederick
(86) International application number: PCT/CN2021/113092
(87) International publication number: WO 2022/062771

(57) **Abstract**

The present disclosure relates to a livestreaming room data exchange method, a related apparatus, and a device. The method comprises: in response to the acquisition of trigger information sent by a server, displaying a second exchange control on a second livestreaming interface of a livestreaming room, the trigger information indicating that the amount of exchanged data of the livestreaming room exceeds a preset threshold; in response to the reception of a trigger operation on the second exchange control, displaying a second exchange panel on the second livestreaming interface, wherein the second exchange panel displays first exchanged data generated during the process of livestreaming of the livestreaming room, and the first exchanged data is associated with a second target control; in response to the reception of a first trigger operation on the second target control, sending a first time stamp to the server; and in response to the reception of a second trigger operation on the second target control, sending a second time stamp to the server, a livestreaming video recorded by a livestreamer user in the time period between the first time stamp and the second time stamp being an exchange video for the first exchanged data.

## Description

### CROSS REFERENCE

The present application is based upon and claims priority to Chinese Patent Application No. 202011033500.7, filed on September 27, 2020, and the entire content thereof is incorporated herein by reference.

### TECHNICAL FIELD

The present disclosure relates to the field of livestream technology, and in particular, to a method and an apparatus for data interaction in a live room, and an electronic device.

### BACKGROUND

With the rise of short videos and livestreams, more and more users begin to interact with each other through the livestreams. An anchor in a live room will check some of the questions in a comment area the audiences care about and answer the questions to interact with the audiences.

The comment area is used as a window for displaying real-time messages, thus there are many types and quantities of messages in the comment area, such as system messages, gift messages, comment messages, and following messages, etc. The messages in the comment area are sorted in chronological order, thus when there are large quantities of messages, the messages in the comment area will be refreshed quickly.

### SUMMARY

According to one aspect of the present disclosure, a method for data interaction in a live room is provided, the method is applied to a first terminal, and includes:
displaying a first interaction control on a first live streaming interface of the live room in response to obtaining trigger information sent by a server, wherein the trigger information indicates that amount of interaction data in the live room exceeds a preset threshold;
displaying a first interaction panel on the first live streaming interface in response to receiving a trigger operation on the first interaction control, wherein the first interaction panel is used for an interaction between an audience and an anchor;
sending first interaction data to the anchor and displaying the first interaction data on the first interaction panel in response to obtaining the first interaction data from the audience through the first interaction panel;
displaying a first target control in response to receiving a target video sent by the server, wherein the target video includes an interaction video provided by the anchor for the first interaction data, and the first target control is associated with the target video; and
switching to a playback interface for the target video in response to receiving a trigger operation on the first target control.

According to embodiments, said sending first interaction data to the anchor in response to obtaining the first interaction data from the audience through the first interaction panel includes one of:
sending the first interaction data to the anchor via the server in response to receiving the first interaction data inputted by the audience in an interaction area of the first interaction panel, and receiving a trigger operation on an interaction initiation control of the first interaction panel; and
sending the first interaction data to the anchor via the server in response to receiving an interaction operation on the first interaction data displayed on the first interaction panel.

According to embodiments, said displaying the first interaction data on the first interaction panel includes:
displaying the first interaction data at a first target position on the first interaction panel based on an aggregated amount of the first interaction data;
wherein an aggregated amount of interaction data displayed at a position before the first target position on the first interaction panel is greater than the aggregated amount of the first interaction data, and an aggregated amount of interaction data displayed at a position after the first target position on the first interaction panel is smaller than the aggregated amount of the first interaction data.

According to another aspect of the present disclosure, a method for data interaction in a live room is provided, the method is applied to a second terminal, and includes:
displaying a second interaction control on a second live streaming interface of the live room in response to obtaining trigger information sent by a server, wherein the trigger information indicates that amount of interaction data in the live room exceeds a preset threshold;
displaying a second interaction panel on the second live streaming interface in response to receiving a trigger operation on the second interaction control, wherein the second interaction panel is used to display first interaction data generated during a livestream in the live room, and the first interaction data is associated with a second target control;
sending a first time stamp to the server in response to receiving a first trigger operation on the second target control; and
sending a second time stamp to the server in response to receiving a second trigger operation on the second target control;
wherein a livestream video recorded by an anchor during a time period between the first time stamp and the second time stamp is used as an interaction video for the first interaction data.

According to embodiments, the method further includes:
determining a target display priority of the first interaction data to be displayed on the second interaction panel based on an interaction state of the first interaction data, wherein the target display priority of the first interaction data of which the interaction state indicates that the first interaction data has not been replied is higher than a second display priority of second interaction data of which an interaction state indicates that the second interaction data has been replied; and
displaying, based on the target display priority, the first interaction data at a second target position on the second interaction panel according to an aggregated amount of the first interaction data;
wherein the second target position matches with the target display priority, and an aggregated amount of interaction data displayed at a position before the second target position on the second interaction panel is greater than the aggregated amount of the first interaction data, and an aggregated amount of interaction data displayed at a position after the second target position on the second interaction panel is smaller than the aggregated amount of the first interaction data.

According to another aspect of the present disclosure, a method for data interaction in a live room is provided, the method is applied to a server, and includes:
sending trigger information to an anchor and an audience in the live room in response to detecting that amount of interaction data in the live room exceeds a preset threshold, wherein the trigger information is used respectively for a first terminal of an audience and a second terminal of an anchor to display an interaction control on a live streaming interface of the live room;
sending first interaction data sent by the first terminal to the anchor, wherein the first interaction data includes interaction data obtained by the audience through a first interaction panel, and the first interaction panel is an interaction panel displayed in response to the audience triggering a first interaction control;
receiving a first time stamp and a second time stamp sent by the second terminal, wherein the first time stamp and the second time stamp includes time points at which the anchor triggers a second target control two times in succession, and wherein the second target control is associated with the first interaction data displayed on a second interaction panel, and the second interaction panel is an interaction panel displayed in response to the anchor triggering a second interaction control;
generating a target video based on the first time stamp and the second time stamp, wherein the target video includes a livestream video recorded by the anchor during a time period between the first time stamp and the second time stamp; and
sending the target video to the audience.

According to embodiments, said generating a target video based on the first time stamp and the second time stamp includes:
obtaining the livestream video recorded during the time period between the first time stamp and the second time stamp by editing a livestream video recorded by the anchor based on the first time stamp and the second time stamp; and
using the livestream video recorded during the time period between the first time stamp and the second time stamp as the target video.

According to another aspect of the present disclosure, an apparatus for data interaction in a live room is provided, the apparatus is applied to a first terminal, and includes:
a first display module configured to display a first interaction control on a first live streaming interface of the live room in response to obtaining trigger information sent by a server, wherein the trigger information indicates that amount of interaction data in the live room exceeds a preset threshold;
a second display module configured to display a first interaction panel on the first live streaming interface in response to receiving a trigger operation on the first interaction control, wherein the first interaction panel is used for an interaction between an audience and an anchor;
a first sending module configured to send first interaction data to the anchor in response to obtaining the first interaction data from the audience through the first interaction panel;
a third display module configured to display the first interaction data on the first interaction panel;
a fourth display module configured to display a first target control in response to receiving a target video sent by the server, wherein the target video includes an interaction video provided by the anchor for the first interaction data, and the first target control is associated with the target video; and
a switching module configured to switch to a playback interface for the target video in response to receiving a trigger operation on the first target control.

According to embodiments, the first sending module includes:
a first sending unit configured to send the first interaction data to the anchor via the server in response to receiving the first interaction data inputted by the audience in an interaction area of the first interaction panel, and receiving a trigger operation on an interaction initiation control of the first interaction panel; and
a second sending unit configured to send the first interaction data to the anchor via the server in response to receiving an interaction operation on the first interaction data displayed on the first interaction panel.

According to embodiments, the third display module is specifically configured to display the first interaction data at a first target position on the first interaction panel based on an aggregated amount of the first interaction data; wherein an aggregated amount of interaction data displayed at a position before the first target position on the first interaction panel is greater than the aggregated amount of the first interaction data, and an aggregated amount of interaction data displayed at a position after the first target position on the first interaction panel is smaller than the aggregated amount of the first interaction data.

According to another aspect of the present disclosure, an apparatus for data interaction in a live room, the apparatus is applied to a second terminal, and includes:
a fifth display module configured to display a second interaction control on a second live streaming interface of the live room in response to obtaining trigger information sent by a server, wherein the trigger information indicates that amount of interaction data in the live room exceeds a preset threshold;
a sixth display module configured to display a second interaction panel on the second live streaming interface in response to receiving a trigger operation on the second interaction control, wherein the second interaction panel is used to display first interaction data generated during a livestream in the live room, and the first interaction data is associated with a second target control;
a second sending module configured to send a first time stamp to the server in response to receiving a first trigger operation on the second target control; and
a third sending module configured to send a second time stamp to the server in response to receiving a second trigger operation on the second target control;
wherein a livestream video recorded by an anchor during a time period between the first time stamp and the second time stamp is used as an interaction video for the first interaction data.

According to embodiments, the apparatus further includes:
a determination module configured to determine a target display priority of the first interaction data to be displayed on the second interaction panel based on an interaction state of the first interaction data, wherein the target display priority of the first interaction data of which the interaction state indicates that the first interaction data has not been replied is higher than a second display priority of second interaction data of which an interaction state indicates that the second interaction data has been replied; and
a seventh display module configured to display, based on the target display priority, the first interaction data at a second target position on the second interaction panel according to an aggregated amount of the first interaction data;
wherein the second target position matches with the target display priority, and an aggregated amount of interaction data displayed at a position before the second target position on the second interaction panel is greater than the aggregated amount of the first interaction data, and an aggregated amount of interaction data displayed at a position after the second target position on the second interaction panel is smaller than the aggregated amount of the first interaction data.

According to another aspect of the present disclosure, an apparatus for data interaction in a live room is provided, the apparatus is applied to a server, and includes:
a fourth sending module configured to send trigger information to an anchor and an audience in the live room in response to detecting that amount of interaction data in the live room exceeds a preset threshold, wherein the trigger information is used respectively for a first terminal of an audience and a second terminal of an anchor to display an interaction control on a live streaming interface of the live room;
a fifth sending module configured to send first interaction data sent by the first terminal to the anchor, wherein the first interaction data includes interaction data obtained by the audience through a first interaction panel, and the first interaction panel is an interaction panel displayed in response to the audience triggering a first interaction control;
a receiving module configured to receive a first time stamp and a second time stamp sent by the second terminal, wherein the first time stamp and the second time stamp includes time points at which the anchor triggers a second target control two times in succession, and wherein the second target control is associated with the first interaction data displayed on a second interaction panel, and the second interaction panel is an interaction panel displayed in response to the anchor triggering a second interaction control;
a generation module configured to generate a target video based on the first time stamp and the second time stamp, wherein the target video includes a livestream video recorded by the anchor during a time period between the first time stamp and the second time stamp; and
a sixth sending module configured to send the target video to the audience.

According to embodiments, the generation module is specifically configured to obtain the livestream video recorded during the time period between the first time stamp and the second time stamp by editing a livestream video recorded by the anchor based on the first time stamp and the second time stamp; and use the livestream video recorded during the time period between the first time stamp and the second time stamp as the target video.

According to another aspect of the present disclosure, a first terminal is provided, which includes:
a first processor; and
a first memory for storing instructions executable by the first processor;
wherein the first processor is configured to execute the instructions to implement the method for data interaction in a live room according to any of a first aspect of the present disclosure.

According to another aspect of the present disclosure, a second terminal is provided, which includes:
a second processor; and
a second memory for storing instructions executable by the second processor;
wherein the second processor is configured to execute the instructions to implement the method for data interaction in a live room according to any of a second aspect of the present disclosure.

According to another aspect of the present disclosure, a server is provided, which includes:
a third processor; and
a third memory for storing instructions executable by the third processor;
wherein the third processor is configured to execute the instructions to implement the method for data interaction in a live room according to any of a third aspect of the present disclosure.

According to another aspect of the present disclosure, a storage medium is provided. The storage medium having instructions stored thereon, which when executed by a processor of an electronic device, enables the electronic device to implement the method for data interaction in a live room described in any of above aspects.

According to another aspect of the present disclosure, a computer program product is provided. The computer program product includes executable instructions, and when running on a computer, the executable instructions enable the computer to implement the method for data interaction in a live room described in any of above aspects.

Technical solutions of embodiments provided by the present disclosure bring at least following beneficial effects.

On a first terminal side, when the amount of the interaction data in the live room is quite large, an additional dedicated interaction region is triggered, so that the audience can interact with the anchor through the dedicated interaction region. In addition, when the interaction video provided by the anchor by replying to the interaction data from the audience is received, the first target control, which is associated with the interaction video, is triggered and displayed in the dedicated interaction region, so that the audience can watch, through the first target control, the interaction video which is provided by the anchor by replying to the interaction data. In this way, the audience can directly interact with the anchor in the dedicated interaction region and watch the interaction video replied to by the anchor during a livestream in the live room, thereby improving the interaction efficiency between the audience and the anchor.

On a second terminal side, when the amount of the interaction data in the live room is quite large, an additional dedicated interaction region, which is used to display the interaction data the audiences send, is triggered, so that the anchor can interact with the audiences in the live room through the dedicated interaction region. A second target control is displayed in association with the interaction data, so that the anchor can reply to the interaction data displayed in the dedicated interaction region through the second target control, and record the interaction video to reply to the interaction data. In this way, the anchor can directly view and reply to the interaction data from the audience in the dedicated interaction region during a livestream in the live room, thereby improving the interaction efficiency between the anchor and the audience.

On a server side, when the amount of the interaction data in the live room is quite large, the trigger information is sent to the anchor and all the audiences in the live room, so that the first terminal of the audience and the second terminal of the anchor can respectively trigger and display an additional dedicated interaction region based on the trigger information. As the media device for the interaction between the audience and the anchor, the server receives the interaction data sent by the audience through the additional dedicated interaction region, sends the interaction data to the anchor, receives the time stamps sent by the anchor when the anchor replies to the interaction data, generates the interaction video used to reply to the interaction data, and send the interaction video to the audience. In this way, the interaction efficiency between the audience and the anchor can be improved during a livestream in the live room.

It should be understood that the foregoing general description and the following detailed description are exemplary and explanatory only and are not restrictive of the present disclosure.

### BRIEF DESCRIPTION OF THE DRAWINGS

The drawings which are incorporated into and constitute a part of this specification, illustrate embodiments consistent with the present disclosure, serve together with the specification to explain the principles of the present disclosure, and do not unduly limit the present disclosure.
FIG. 1 illustrates a flowchart of a method for data interaction in a live room according to an exemplary embodiment;
FIG. 2 illustrates another flowchart of a method for data interaction in a live room according to an exemplary embodiment;
FIG. 3 illustrates another flowchart of a method for data interaction in a live room according to an exemplary embodiment;
FIG. 4 illustrates a block diagram of an apparatus for data interaction in a live room according to an exemplary embodiment;
FIG. 5 illustrates another block diagram of an apparatus for data interaction in a live room according to an exemplary embodiment;
FIG. 6 illustrates another block diagram of an apparatus for data interaction in a live room according to an exemplary embodiment;
FIG. 7 illustrates a block diagram of an electronic device according to an exemplary embodiment; and
FIG. 8 illustrates a block diagram of a server according to an exemplary embodiment.

### DETAILED DESCRIPTION

In order to make those skilled in the art better understand the technical solutions of the present disclosure, embodiments of the present disclosure will be clearly and completely described below with reference to the drawings.

It should be noted that terms "first", "second" and the like in the specification and claims of the present disclosure and in the drawings are used to distinguish similar objects, and are not necessarily used to describe a specific sequence or order. It should be understood that the data used in such ways are interchangeable under appropriate situations so that the embodiments of the present disclosure described herein can be practiced in sequences other than those illustrated or described. The implementations described in the embodiments below are not intended to represent all implementations consistent with the present disclosure. Rather, they are merely examples, which are consistent with some aspects of the present disclosure, of apparatus and methods as recited in the appended claims.

An application scene of the present disclosure is first introduced. The present disclosure is mainly applied to a livestream scene. The livestream scene includes multiple devices, which are a first terminal used by an audience in a live room, a second terminal used by an anchor in the live room, and a server. The audience uses the first terminal to watch a livestream conducting in the live room and to interact with the anchor. The anchor uses the second terminal to record a livestream video and to interact with the audience. The server serves as a media device between the audience and the anchor, and is used to transmit the livestream video recorded by the anchor to the audience in real time, and is also used to transmit interaction data between the audience and the anchor. Methods for data interaction in a live room implemented on different device sides will be detailed described in the following.

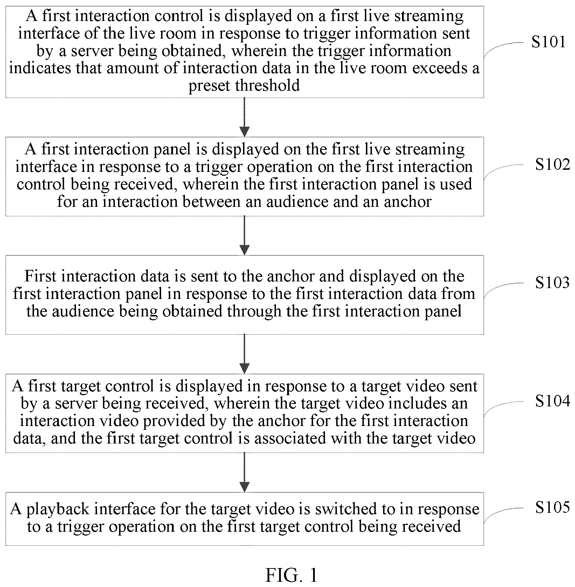

FIG. 1 illustrates a flowchart of a method for data interaction in a live room according to an exemplary embodiment. The method for data interaction in the live room is applied to the first terminal, and includes following steps, as shown in FIG. 1.

In S101, a first interaction control is displayed on a first live streaming interface of the live room in response to trigger information sent by a server being obtained. Herein, the trigger information indicates that amount of interaction data in the live room exceeds a preset threshold.

In S102, a first interaction panel is displayed on the first live streaming interface in response to a trigger operation on the first interaction control being received. Herein, the first interaction panel is used for an interaction between an audience and an anchor.

In S103, first interaction data is sent to the anchor and displayed on the first interaction panel in response to the first interaction data from the audience being obtained through the first interaction panel.

In S104, a first target control is displayed in response to a target video sent by a server being received. Herein, the target video includes an interaction video provided by the anchor for the first interaction data, and the first target control is associated with the target video.

In S105, a playback interface for the target video is switched to in response to a trigger operation on the first target control being received.

The first terminal may detect in real time or periodically whether the trigger information sent by the server is received. The trigger information indicates that the amount of the interaction data in the live room exceeds a preset threshold. The amount of the interaction data in the live room may include two indicators, which are current number of persons who interact with others in the live room and amount of interaction information in the live room. The current number of persons who interact with others in the live room may be number of online audiences in the live room. The amount of the interaction information in the live room may be number of comments per unit of time, such as the number of comments per second.

When detecting that the number of online audiences in the live room exceeds 100,000 and the number of comments per unit of time exceeds 5 comments per second, the server may generate the trigger information and send the trigger information to the audiences.

When detecting the trigger information sent by the server, the first terminal of the audience may display a first interaction control on a first live streaming interface of the live room. The first interaction control is used to trigger an interaction function of the first terminal. For example, the first interaction control may be displayed at the bottom of the first live streaming interface of the live room, which may be referred to as a question button.

The audience may trigger the first interaction control, and the first terminal may accordingly display a first interaction panel on the first live streaming interface of the live room. The first interaction panel is an interaction region dedicated for the audience and the anchor, and the audience can interact with the anchor through the first interaction panel. For example, when the audience triggers the first interaction control, the first interaction panel may pop up from the bottom of the first live streaming interface of the live room. The first interaction panel may be referred to as a question panel.

The dedicated interaction region may be referred to as a question region, in which the audience can ask questions to the anchor. The dedicated interaction region may also be used for other purposes, such as for comments. According to embodiments, where the audience interacts with the anchor in the manner of asking questions through the dedicated interaction region is taking as an example for detailed description, that is, the first interaction data includes question data through which the audience asks questions to the anchor.

The audience can ask questions on the first interaction panel, and a step S103 specifically includes one of the following:
the first interaction data is sent to the anchor via the server in response to the first interaction data inputted by the audience in an interaction area of the first interaction panel being received, and a trigger operation on an interaction initiation control of the first interaction panel being received; and
the first interaction data is sent to the anchor via the server in response to an interaction operation on the first interaction data displayed in the first interaction panel being received.

That is, the audience can ask questions through the first interaction panel in two ways, and can choose any one of the ways to ask questions. One way to ask questions is as follows, the first interaction panel may include an interaction area and an interaction initiation control, the audience can input the questions to be asked in the interaction area of the first interaction panel, and trigger the interaction initiation control when finishing inputting, to send the questions out. Accordingly, the first terminal sends the first interaction data out, in response to receiving the question data inputted by the audience in the interaction area of the first interaction panel, and receiving the trigger operation on the interaction initiation control by the audience.

Another way to ask questions is as follows, in addition to the questions inputted by the audience, the first interaction panel also displays questions asked by other audiences in the live room. The audience of the first terminal can perform the trigger operation on the first interaction data, to indicate that the question displayed is also the question that the audience of the first terminal wants to ask. The trigger operation herein allows the audience to give a 'like' to the question represented by the first interaction data. Accordingly, the first terminal sends the first interaction data to the anchor via the server in response to receiving the interaction operation on the first interaction data.

Correspondingly, the first terminal can display the questions on the first interaction panel in two ways. One way to display the questions is as follows, the first interaction data is directly displayed on the first interaction panel when the first interaction data is the question data inputted by the audience in the interaction area. Another way to display the questions is as follows, when the first interaction data is the question data generated based on the displayed first interaction data to which the audience has given a 'like', tip information representing the number of likes is displayed on the first interaction data, and the number of likes is increased by one each time a like is given.

In order for the audience to have a good understanding of issues that other audiences are concerned about, a step of displaying the first interaction data on the first interaction panel includes following steps.

The first interaction data is displayed at a first target position on the first interaction panel based on an aggregated amount of the first interaction data.

Herein, an aggregated amount of interaction data displayed at a position before the first target position on the first interaction panel is greater than the aggregated amount of the first interaction data, and an aggregated amount of interaction data displayed at a position after the first target position on the first interaction panel is smaller than the aggregated amount of the first interaction data.

That is, when the first interaction panel includes multiple question data, the question data can be sorted in descending order of the aggregated amount thereof, so that the question data from the audiences can be aggregated while the audience can intuitively learn what issues other audiences are concerned about. The aggregated amount herein refers to the number of the questions aggregated based on the likes the audiences give, which can be represented by the number of likes.

In addition, the question data displayed on the first interaction panel may include two kinds of interaction states, which are a first state and a second state. The first state indicates that the question data has been replied to by the anchor, and the second state indicates that the question data has not been replied to by the anchor.

In response to the anchor having replied to the question data, a first target control may correspond to the question data, and may be displayed at a position after the position where the question data is located. The first target control may be referred to as a viewing control, and a target video may be associated with the viewing control. The target video includes an interaction video provided by the anchor for the question data corresponding to the viewing control. That is, the target video includes the interaction video provided by the anchor by replying to the question data corresponding to the viewing control. After the audience triggers the viewing control, the first terminal will jump to the target video associated with the viewing control, and the audience can watch a livestream video recorded when the anchor answers audience's questions.

For the question data not having been replied to by the anchor, in response to the anchor replying to the question data, the target video sent by the server can be received. In response to the target video sent by the server being received, the first target control corresponding the question data may be displayed, indicating that the question data has been converted from the second state to the first state.

According to embodiments, on a first terminal side, when the amount of the interaction data in the live room is quite large, an additional dedicated interaction region is triggered, so that the audience can interact with the anchor through the dedicated interaction region. In addition, when the interaction video provided by the anchor by replying to the interaction data from the audience is received, the first target control, which is associated with the interaction video, is triggered and displayed in the dedicated interaction region, so that the audience can watch, through the first target control, the interaction video which is provided by the anchor by replying to the interaction data. In this way, the audience can directly interact with the anchor in the dedicated interaction region and watch the interaction video replied to by the anchor during a livestream in the live room, thereby improving the interaction efficiency between the audience and the anchor.

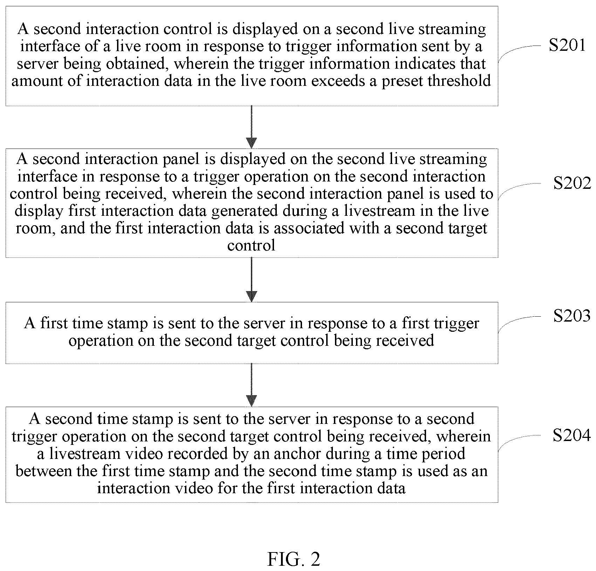

The present disclosure also provides a method for data interaction in a live room. FIG. 2 illustrates another flowchart of a method for data interaction in a live room according to an exemplary embodiment. The method for data interaction in the live room is used in a second terminal, and the method includes following steps, as shown in FIG. 2.

In S201, a second interaction control is displayed on a second live streaming interface of a live room in response to trigger information sent by a server being obtained. Herein, the trigger information indicates that amount of interaction data in the live room exceeds a preset threshold.

In S202, a second interaction panel is displayed on the second live streaming interface in response to a trigger operation on the second interaction control being received. Herein, the second interaction panel is used to display first interaction data generated during a livestream in the live room, and the first interaction data is associated with a second target control.

In S203, a first time stamp is sent to the server in response to a first trigger operation on the second target control being received.

In S204, a second time stamp is sent to the server in response to a second trigger operation on the second target control being received.

A livestream video recorded by an anchor during a time period between the first time stamp and the second time stamp is used as an interaction video for the first interaction data.

According to embodiments, the second terminal may detect in real time or periodically whether the trigger information sent by the server is received. The trigger information indicates that the amount of the interaction data in the live room exceeds a preset threshold. The amount of the interaction data in the live room may include two indicators, which are current number of persons who interact with others in the live room and amount of interaction information in the live room. The current number of persons who interact with others in the live room may be number of online audiences in the live room. The amount of the interaction information in the live room may be number of comments per unit of time, such as the number of comments per second.

When detecting that the number of online audiences in the live room exceeds 100,000 and the number of comments per unit of time exceeds 5 comments per second, the server may generate the trigger information and send the trigger information to the anchor.

When detecting the trigger information sent by the server, the second terminal of the anchor may display a second interaction control on a second live streaming interface of the live room. The second interaction control is used to trigger an interaction function of the second terminal. For example, the second interaction control may be displayed at the bottom of the second live streaming interface of the live room, and the second interaction control may be referred to as a question button.

The anchor may trigger the second interaction control, and the second terminal may accordingly display a second interaction panel on the second live streaming interface of the live room. The second interaction panel is an interaction region dedicated for the anchor and the audience, and the anchor can interact with the audience through the second interaction panel. For example, when the anchor triggers the second interaction control, the second interaction panel may pop up from the bottom of the second live streaming interface of the live room. The second interaction panel may be referred to as a question panel.

The dedicated interaction region may be referred to as a question region, and the anchor can answer the questions raised by the audience through the dedicated interaction region.

The second interaction panel includes questions raised by the audiences, and question data displayed on the second interaction panel also includes two kinds of interaction states, which are a first state and a second state. The first state indicates that the question data has been replied to by the anchor, and the second state indicates that the question data has not been replied to by the anchor.

The second interaction panel may be different from the first interaction panel. The second interaction panel is designed to better display to the anchor the question data from the audiences, and to allow the anchor to interact with the audiences more conveniently.

After the second interaction panel is displayed on the second live streaming interface, the method includes following steps.

A target display priority of the first interaction data to be displayed on the second interaction panel is determined based on an interaction state of the first interaction data. Herein, the target display priority of the first interaction data of which the interaction state indicates that the first interaction data has not been replied is higher than a second display priority of second interaction data of which an interaction state indicates that the second interaction data has been replied.

Based on the target display priority, the first interaction data is displayed at a second target position on the second interaction panel according to an aggregated amount of the first interaction data.

The second target position matches with the target display priority. An aggregated amount of interaction data displayed at a position before the second target position on the second interaction panel is greater than the aggregated amount of the first interaction data, and an aggregated amount of interaction data displayed at a position after the second target position on the second interaction panel is smaller than the aggregated amount of the first interaction data.

That is, the second interaction panel displays all questions raised by the audiences, and the questions are sorted according to the interaction state and the number of likes of the question data. The question data having high number of likes and not having been replied to (or not having been handled) is preferentially displayed.

For the question data not having been replied to, a second target control is displayed in association. The second target control may be referred to as a reply control. When the anchor is ready to answer the question, he may click the second target control and start answering the question. Accordingly, the second terminal will send to the server a time point at which the anchor triggers the second target control when he is ready to answer the question as a first time stamp. When the anchor finishes answering the question, he may click the second target control again, and accordingly, the second terminal will send to the server a time point at which the anchor triggers the second target control when he finishes answering the question as a second time stamp.

After the reply to the question data is completed, the interaction state of the question data is converted from the second state to the first state.

After receiving the first time stamp and the second time stamp, the server will generate a target video, and send the target video to all audiences in the live room. The target video includes a livestream video recorded by the anchor during a time period between the first time stamp and the second time stamp.

According to embodiments, on a second terminal side, when the amount of the interaction data in the live room is quite large, an additional dedicated interaction region, which is used to display the interaction data the audiences send, is triggered, so that the anchor can interact with the audiences in the live room through the dedicated interaction region. A second target control is displayed in association with the interaction data, so that the anchor can reply to the interaction data displayed in the dedicated interaction region through the second target control, and record the interaction video to reply to the interaction data. In this way, the anchor can directly view and reply to the interaction data from the audience in the dedicated interaction region during a livestream in the live room, thereby improving the interaction efficiency between the anchor and the audience.

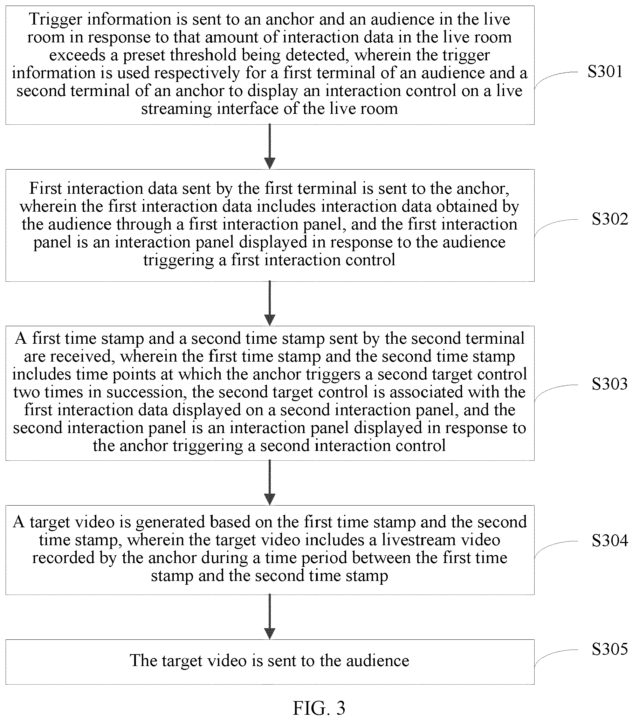

The present disclosure also provides a method for data interaction in a live room. FIG. 3 illustrates another flowchart of a method for data interaction in a live room according to an exemplary embodiment. The method for data interaction in the live room is used in a server, and the method includes following steps, as shown in FIG. 3.

In S301, trigger information is sent to an anchor and an audience in the live room in response to that amount of interaction data in the live room exceeds a preset threshold being detected. Herein, the trigger information is used respectively for a first terminal of an audience and a second terminal of an anchor to display an interaction control on a live streaming interface of the live room.

In S302, first interaction data sent by the first terminal is sent to the anchor. Herein, the first interaction data includes interaction data obtained by the audience through a first interaction panel, and the first interaction panel is an interaction panel displayed in response to the audience triggering a first interaction control.

In S303, a first time stamp and a second time stamp sent by the second terminal are received. Herein, the first time stamp and the second time stamp includes time points at which the anchor triggers a second target control two times in succession. Herein, the second target control is associated with the first interaction data displayed on a second interaction panel, and the second interaction panel is an interaction panel displayed in response to the anchor triggering a second interaction control.

In S304, a target video is generated based on the first time stamp and the second time stamp. Herein, the target video includes a livestream video recorded by the anchor during a time period between the first time stamp and the second time stamp.

In S305, the target video is sent to the audience.

According to embodiments, the server acts as a media device between the anchor and the audience, detects the amount of the interaction data in the live room, generates trigger information after detecting that the amount of the interaction data in the live room exceeds a preset threshold, and sends the trigger information to the anchor and all the audiences, so that the first terminal of the audience and the second terminal of the anchor respectively display an interaction control on the live streaming interface of the live room based on the trigger information.

The server may also send to the anchor the question data from the audience, so that the audience can ask questions to the anchor.

The server may also receive the first time stamp and the second time stamp involved when the anchor replies to the question data from the audience, generate the target video based on the first time stamp and the second time stamp, and send the target video to the audience, so that the anchor can answer the questions raised by the audience.

A step of generating the target video based on the first time stamp and the second time stamp includes following steps.

The livestream video recorded during the time period between the first time stamp and the second time stamp is obtained by editing a livestream video recorded by the anchor based on the first time stamp and the second time stamp.

The livestream video recorded during the time period between the first time stamp and the second time stamp is used as the target video.

According to embodiments, on a server side, when the amount of the interaction data in the live room is quite large, the trigger information is sent to the anchor and all the audiences in the live room, so that the first terminal of the audience and the second terminal of the anchor can respectively trigger and display an additional dedicated interaction region based on the trigger information. As the media device for the interaction between the audience and the anchor, the server receives the interaction data sent by the audience through the additional dedicated interaction region, sends the interaction data to the anchor, receives the time stamps sent by the anchor when the anchor replies to the interaction data, generates the interaction video used to reply to the interaction data, and send the interaction video to the audience. In this way, the interaction efficiency between the audience and the anchor can be improved during a livestream in the live room.

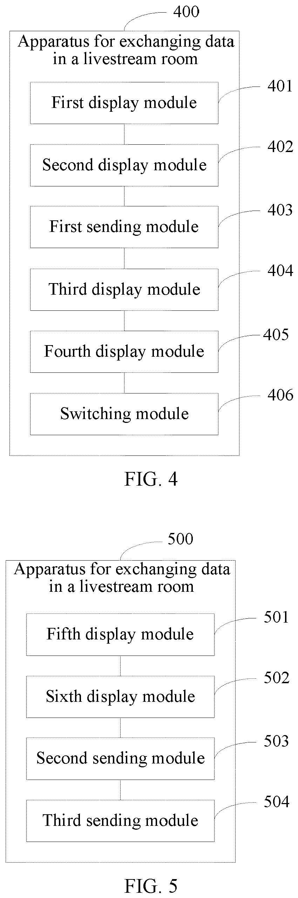

FIG. 4 illustrates a block diagram of an apparatus for data interaction in a live room according to an exemplary embodiment. The apparatus is applied to a first terminal. As shown in FIG. 4, the apparatus includes a first display module 401, a second display module 402, a first sending module 403, a third display module 404, a fourth display module 405 and a switching module 406.

The first display module 401 is configured to display a first interaction control on a first live streaming interface of the live room in response to obtaining trigger information sent by a server, wherein the trigger information indicates that amount of interaction data in the live room exceeds a preset threshold.

The second display module 402 is configured to display a first interaction panel on the first live streaming interface in response to receiving a trigger operation on the first interaction control, wherein the first interaction panel is used for an interaction between an audience and an anchor.

a first sending module 403 is configured to send first interaction data to the anchor in response to obtaining the first interaction data from the audience through the first interaction panel.

The third display module 404 is configured to display the first interaction data on the first interaction panel.

The fourth display module 405 is configured to display a first target control in response to receiving a target video sent by the server, wherein the target video includes an interaction video provided by the anchor for the first interaction data, and the first target control is associated with the target video.

The switching module 406 is configured to switch to a playback interface for the target video in response to receiving a trigger operation on the first target control.

According to embodiments, the first sending module 403 includes a first sending unit and a second sending unit.

The first sending unit is configured to send the first interaction data to the anchor via the server in response to receiving the first interaction data inputted by the audience in an interaction area of the first interaction panel, and receiving a trigger operation on an interaction initiation control of the first interaction panel.

The second sending unit is configured to send the first interaction data to the anchor via the server in response to receiving an interaction operation on the first interaction data displayed on the first interaction panel.

According to embodiments, the third display module 404 is specifically configured to display the first interaction data at a first target position on the first interaction panel based on an aggregated amount of the first interaction data; wherein an aggregated amount of interaction data displayed at a position before the first target position on the first interaction panel is greater than the aggregated amount of the first interaction data, and an aggregated amount of interaction data displayed at a position after the first target position on the first interaction panel is smaller than the aggregated amount of the first interaction data.

Specific operations of the modules of the apparatus according to above embodiments have been described in detail in method embodiments on the first terminal side, and will not be described in detail here.

FIG. 5 illustrates a block diagram of an apparatus for data interaction in a live room according to an exemplary embodiment. The apparatus is applied to a second terminal. As shown in FIG. 5, the apparatus includes a fifth display module 501, a sixth display module 502, a second sending module 503 and a third sending module 504.

The fifth display module 501 is configured to display a second interaction control on a second live streaming interface of the live room in response to obtaining trigger information sent by a server, wherein the trigger information indicates that amount of interaction data in the live room exceeds a preset threshold.

The sixth display module 502 is configured to display a second interaction panel on the second live streaming interface in response to receiving a trigger operation on the second interaction control, wherein the second interaction panel is used to display first interaction data generated during a livestream in the live room, and the first interaction data is associated with a second target control.

The second sending module 503 is configured to send a first time stamp to the server in response to receiving a first trigger operation on the second target control.
a third sending module 504 is configured to send a second time stamp to the server in response to receiving a second trigger operation on the second target control.

A livestream video recorded by an anchor during a time period between the first time stamp and the second time stamp is used as an interaction video for the first interaction data.

According to embodiments, the apparatus further includes a determination module and a seventh display module.

The determination module is configured to determine a target display priority of the first interaction data to be displayed on the second interaction panel based on an interaction state of the first interaction data, wherein the target display priority of the first interaction data of which the interaction state indicates that the first interaction data has not been replied is higher than a second display priority of second interaction data of which an interaction state indicates that the second interaction data has been replied.

The seventh display module is configured to display, based on the target display priority, the first interaction data at a second target position on the second interaction panel according to an aggregated amount of the first interaction data.

The second target position matches with the target display priority, and an aggregated amount of interaction data displayed at a position before the second target position on the second interaction panel is greater than the aggregated amount of the first interaction data, and an aggregated amount of interaction data displayed at a position after the second target position on the second interaction panel is smaller than the aggregated amount of the first interaction data.

Specific operations of the modules of the apparatus according to above embodiments have been described in detail in method embodiments on the second terminal side, and will not be described in detail here.

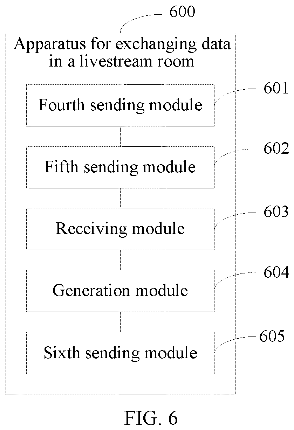

FIG. 6 illustrates a block diagram of an apparatus for data interaction in a live room according to an exemplary embodiment. The apparatus is applied to a server. As shown in FIG. 6, the apparatus includes a fourth sending module 601, a fifth sending module 602, a receiving module 603, a generation module 604 and a sixth sending module 605.

The fourth sending module 601 is configured to send trigger information to an anchor and an audience in the live room in response to detecting that amount of interaction data in the live room exceeds a preset threshold, wherein the trigger information is used respectively for a first terminal of an audience and a second terminal of an anchor to display an interaction control on a live streaming interface of the live room.

The fifth sending module 602 is configured to send first interaction data sent by the first terminal to the anchor, wherein the first interaction data includes interaction data obtained by the audience through a first interaction panel, and the first interaction panel is an interaction panel displayed in response to the audience triggering a first interaction control.

The receiving module 603 is configured to receive a first time stamp and a second time stamp sent by the second terminal, wherein the first time stamp and the second time stamp includes time points at which the anchor triggers a second target control two times in succession, and wherein the second target control is associated with the first interaction data displayed on a second interaction panel, and the second interaction panel is an interaction panel displayed in response to the anchor triggering a second interaction control.

The generation module 604 is configured to generate a target video based on the first time stamp and the second time stamp, wherein the target video includes a livestream video recorded by the anchor during a time period between the first time stamp and the second time stamp.

The sixth sending module 605 is configured to send the target video to the audience.

According to embodiments, the generation module 604 is specifically configured to obtain the livestream video recorded during the time period between the first time stamp and the second time stamp by editing a livestream video recorded by the anchor based on the first time stamp and the second time stamp; and use the livestream video recorded during the time period between the first time stamp and the second time stamp as the target video.

Specific operations of the modules of the apparatus according to above embodiments have been described in detail in method embodiments on the server side, and will not be described in detail here.

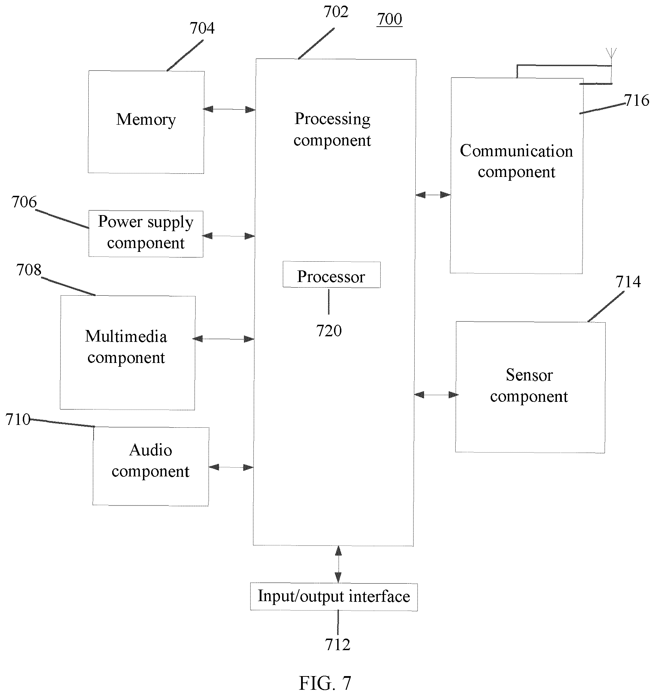

FIG. 7 illustrates a block diagram of an electronic device according to an exemplary embodiment. The electronic device may be a first terminal or a second terminal, which may be mobile phones, computers, digital broadcasting terminals, message sending and receiving devices, game consoles, tablet devices, medical equipment, fitness equipment, personal digital assistants, etc.

As shown in FIG. 7, an electronic device 700 may include one or more of following components: a processing component 702, a memory 704, a power supply component 706, a multimedia component 708, an audio component 710, an input/output (I/O) interface 712, a sensor component 714, and a communication component 716.

The processing component 702 generally controls overall operations of the electronic device 700, such as operations associated with display, phone calls, data communications, cameras, and recording. The processing component 702 may include one or more processors 720 to execute instructions to implement all or part of the steps of the method on the first terminal side or the method on the second terminal side described above. Additionally, the processing component 702 may include one or more modules to facilitate interactions between the processing component 702 and other components. For example, the processing component 702 may include a multimedia module to facilitate an interaction between the multimedia component 708 and the processing component 702.

Memory 704 is configured to store various types of data to support operations in electronic device 700. Examples of such data include instructions, contact data, phonebook data, messages, pictures, videos, and the like, used for any application or method running or implemented on electronic device 700. Memory 704 may be implemented by any type of volatile or nonvolatile storage device or combination thereof, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power supply component 706 provides power to various components of electronic device 700. The power supply component 706 may include a power management system, one or more power supplies, and other components associated with generating, managing, and distributing power to electronic device 700.

The multimedia component 708 includes a screen that provides an output interface between the electronic device 700 and a user. In some embodiments, the screen may include a liquid crystal display (LCD) and a touch panel (TP). In a case where the screen includes a touch panel, the screen may be implemented as a touch screen to receive input signals from the user. The touch panel includes one or more touch sensors to sense touch, swipe, and other gestures on the touch panel. The touch sensor may not only sense boundaries of a touch or a swipe action, but also detect duration and pressure associated with the touch or swipe action. In some embodiments, the multimedia component 708 includes a front camera and/or a rear camera. When the electronic device 700 is in an operation mode, such as a shooting mode or a video mode, the front camera and/or the rear camera may receive external multimedia data. Each of the front and rear cameras can be a fixed optical lens system or have focal length and optical zoom capability.

The audio component 710 is configured to output and/or input audio signals. For example, the audio component 710 includes a microphone (MIC) that is configured to receive external audio signals when the electronic device 700 is in an operating mode, such as a call mode, a recording mode, and a voice recognition mode. The received audio signal may be further stored in memory 704 or transmitted via the communication component 716. In some embodiments, the audio component 710 further includes a speaker for outputting audio signals.

I/O interface 712 provides an interface between the processing component 702 and peripheral interface modules, and the peripheral interface modules may be keyboards, click wheels, buttons, and the like. These buttons may include, but are not limited to a home button, a volume button, a start button, and a lock button.

The sensor component 714 includes one or more sensors for providing state assessment of various aspects of electronic device 700. For example, the sensor component 714 can detect an open/closed state of the electronic device 700, relative positioning of the component, such as the display and the keypad of the electronic device 700. The sensor component 714 can also detect changes in a position of the electronic device 700 or one component of the electronic devices 700, presence or absence of contact with the electronic device 700, orientation or acceleration/deceleration of the electronic device 700 and changes in temperature of the electronic device 700. The sensor component 714 may include a proximity sensor configured to detect the presence of nearby objects when there is no physical contact. The sensor component 714 may also include a light sensor, such as a CMOS or a CCD image sensor, for use in imaging applications. In some embodiments, the sensor component 714 may also include an acceleration sensor, a gyroscope sensor, a magnetic sensor, a pressure sensor, or a temperature sensor.

The communication component 716 is configured to facilitate wired or wireless communications between electronic device 700 and other devices. The electronic device 700 may access to a wireless network based on a communication standard, such as WiFi, a carrier network (e.g., 2G, 3G, 4G, or 5G), or a combination thereof. In some embodiments, the communication component 716 receives broadcast signals or broadcast related information from an external broadcast management system via a broadcast channel. In some embodiments, the communication component 716 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In some embodiments, electronic device 700 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, for implementing the method on the first terminal side, or the method on the second terminal side mentioned above.

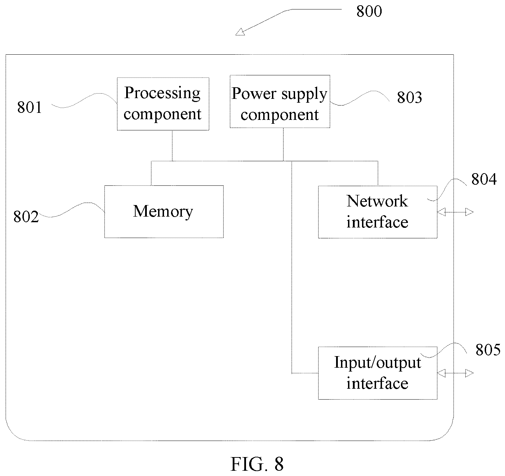

FIG. 8 is a block diagram of a server according to an exemplary embodiment. The server includes a processing component 801, further one or more processors, and a memory resource represented by a memory 802 for storing instructions, such as an application, that can be executed by the processing component 801. An application stored in memory 802 may include one or more modules, each corresponding to a set of instructions. Furthermore, the processing component 801 is configured to execute instructions to implement the method on the server side described above.

Server 800 may also include a power supply component 803 configured to perform power management of the server 800, a wired or wireless network interface 804 configured to connect server 800 to a network, and an input/output (I/O) interface 805. Server 800 may be operated based on an operating system stored in memory 802, such as Windows Server^{™}, Mac OS X^{™}, Unix^{™}, Linux^{™}, FreeBSD^{™}, and the like.

In some embodiments, a storage medium including instructions, such as a memory including instructions, is also provided, and the instructions can be executed by a processor of a terminal to implement above method on the first terminal side, or above method on the second terminal side, or above method on the server side. In some embodiments, the storage medium may be a non-transitory computer-readable storage medium, for example, the non-transitory computer-readable storage medium may be ROM, random access memory (RAM), CD-ROM, magnetic tape, floppy disk, and optical data storage devices, etc.

All embodiments of the present disclosure can be implemented independently or in combination with other embodiments, which are all regarded as within a protection scope defined by the present disclosure.

## Claims

1. A method for data interaction in a live room, applied to a first terminal, comprising:
displaying a first interaction control on a first live streaming interface of the live room in response to obtaining trigger information sent by a server, wherein the trigger information indicates that amount of interaction data in the live room exceeds a preset threshold;
displaying a first interaction panel on the first live streaming interface in response to receiving a trigger operation on the first interaction control, wherein the first interaction panel is used for an interaction between an audience and an anchor;
sending first interaction data to the anchor and displaying the first interaction data on the first interaction panel in response to obtaining the first interaction data from the audience through the first interaction panel;
displaying a first target control in response to receiving a target video sent by the server, wherein the target video includes an interaction video provided by the anchor for the first interaction data, and the first target control is associated with the target video; and
switching to a playback interface for the target video in response to receiving a trigger operation on the first target control.

2. The method according to claim 1, wherein said sending first interaction data to the anchor in response to obtaining the first interaction data from the audience through the first interaction panel comprises one of:
sending the first interaction data to the anchor via the server in response to receiving the first interaction data inputted by the audience in an interaction area of the first interaction panel, and receiving a trigger operation on an interaction initiation control of the first interaction panel; and
sending the first interaction data to the anchor via the server in response to receiving an interaction operation on the first interaction data displayed on the first interaction panel.

3. The method according to claim 1, wherein said displaying the first interaction data on the first interaction panel comprises:
displaying the first interaction data at a first target position on the first interaction panel based on an aggregated amount of the first interaction data;
wherein an aggregated amount of interaction data displayed at a position before the first target position on the first interaction panel is greater than the aggregated amount of the first interaction data, and an aggregated amount of interaction data displayed at a position after the first target position on the first interaction panel is smaller than the aggregated amount of the first interaction data.

4. A method for data interaction in a live room, applied to a second terminal, comprising:
displaying a second interaction control on a second live streaming interface of the live room in response to obtaining trigger information sent by a server, wherein the trigger information indicates that amount of interaction data in the live room exceeds a preset threshold;
displaying a second interaction panel on the second live streaming interface in response to receiving a trigger operation on the second interaction control, wherein the second interaction panel is used to display first interaction data generated during a livestream in the live room, and the first interaction data is associated with a second target control;
sending a first time stamp to the server in response to receiving a first trigger operation on the second target control; and
sending a second time stamp to the server in response to receiving a second trigger operation on the second target control;
wherein a livestream video recorded by an anchor during a time period between the first time stamp and the second time stamp is used as an interaction video for the first interaction data.

5. The method according to claim 4, further comprising:
determining a target display priority of the first interaction data to be displayed on the second interaction panel based on an interaction state of the first interaction data, wherein the target display priority of the first interaction data of which the interaction state indicates that the first interaction data has not been replied is higher than a second display priority of second interaction data of which an interaction state indicates that the second interaction data has been replied; and
displaying, based on the target display priority, the first interaction data at a second target position on the second interaction panel according to an aggregated amount of the first interaction data;
wherein the second target position matches with the target display priority, and an aggregated amount of interaction data displayed at a position before the second target position on the second interaction panel is greater than the aggregated amount of the first interaction data, and an aggregated amount of interaction data displayed at a position after the second target position on the second interaction panel is smaller than the aggregated amount of the first interaction data.

6. A method for data interaction in a live room, applied to a server, comprising:
sending trigger information to an anchor and an audience in the live room in response to detecting that amount of interaction data in the live room exceeds a preset threshold, wherein the trigger information is used respectively for a first terminal of an audience and a second terminal of an anchor to display an interaction control on a live streaming interface of the live room;
sending first interaction data sent by the first terminal to the anchor, wherein the first interaction data comprises interaction data obtained by the audience through a first interaction panel, and the first interaction panel is an interaction panel displayed in response to the audience triggering a first interaction control;
receiving a first time stamp and a second time stamp sent by the second terminal, wherein the first time stamp and the second time stamp comprises time points at which the anchor triggers a second target control two times in succession, and wherein the second target control is associated with the first interaction data displayed on a second interaction panel, and the second interaction panel is an interaction panel displayed in response to the anchor triggering a second interaction control;
generating a target video based on the first time stamp and the second time stamp, wherein the target video comprises a livestream video recorded by the anchor during a time period between the first time stamp and the second time stamp; and
sending the target video to the audience.

7. The method according to claim 6, wherein said generating a target video based on the first time stamp and the second time stamp comprises:
obtaining the livestream video recorded during the time period between the first time stamp and the second time stamp by editing a livestream video recorded by the anchor based on the first time stamp and the second time stamp; and
using the livestream video recorded during the time period between the first time stamp and the second time stamp as the target video.

8. An apparatus for data interaction in a live room, applied to a first terminal, comprising:
a first display module configured to display a first interaction control on a first live streaming interface of the live room in response to obtaining trigger information sent by a server, wherein the trigger information indicates that amount of interaction data in the live room exceeds a preset threshold;
a second display module configured to display a first interaction panel on the first live streaming interface in response to receiving a trigger operation on the first interaction control, wherein the first interaction panel is used for an interaction between an audience and an anchor;
a first sending module configured to send first interaction data to the anchor in response to obtaining the first interaction data from the audience through the first interaction panel;
a third display module configured to display the first interaction data on the first interaction panel;
a fourth display module configured to display a first target control in response to receiving a target video sent by the server, wherein the target video includes an interaction video provided by the anchor for the first interaction data, and the first target control is associated with the target video; and
a switching module configured to switch to a playback interface for the target video in response to receiving a trigger operation on the first target control.

9. The apparatus according to claim 8, wherein the first sending module comprises:
a first sending unit configured to send the first interaction data to the anchor via the server in response to receiving the first interaction data inputted by the audience in an interaction area of the first interaction panel, and receiving a trigger operation on an interaction initiation control of the first interaction panel; and
a second sending unit configured to send the first interaction data to the anchor via the server in response to receiving an interaction operation on the first interaction data displayed on the first interaction panel.

10. The apparatus according to claim 8, wherein the third display module is specifically configured to display the first interaction data at a first target position on the first interaction panel based on an aggregated amount of the first interaction data; wherein an aggregated amount of interaction data displayed at a position before the first target position on the first interaction panel is greater than the aggregated amount of the first interaction data, and an aggregated amount of interaction data displayed at a position after the first target position on the first interaction panel is smaller than the aggregated amount of the first interaction data.

11. An apparatus for data interaction in a live room, applied to a second terminal, comprising:
a fifth display module configured to display a second interaction control on a second live streaming interface of the live room in response to obtaining trigger information sent by a server, wherein the trigger information indicates that amount of interaction data in the live room exceeds a preset threshold;
a sixth display module configured to display a second interaction panel on the second live streaming interface in response to receiving a trigger operation on the second interaction control, wherein the second interaction panel is used to display first interaction data generated during a livestream in the live room, and the first interaction data is associated with a second target control;
a second sending module configured to send a first time stamp to the server in response to receiving a first trigger operation on the second target control; and
a third sending module configured to send a second time stamp to the server in response to receiving a second trigger operation on the second target control;
wherein a livestream video recorded by an anchor during a time period between the first time stamp and the second time stamp is used as an interaction video for the first interaction data.

12. The apparatus according to claim 11, further comprising:
a determination module configured to determine a target display priority of the first interaction data to be displayed on the second interaction panel based on an interaction state of the first interaction data, wherein the target display priority of the first interaction data of which the interaction state indicates that the first interaction data has not been replied is higher than a second display priority of second interaction data of which an interaction state indicates that the second interaction data has been replied; and
a seventh display module configured to display, based on the target display priority, the first interaction data at a second target position on the second interaction panel according to an aggregated amount of the first interaction data;
wherein the second target position matches with the target display priority, and an aggregated amount of interaction data displayed at a position before the second target position on the second interaction panel is greater than the aggregated amount of the first interaction data, and an aggregated amount of interaction data displayed at a position after the second target position on the second interaction panel is smaller than the aggregated amount of the first interaction data.

13. An apparatus for data interaction in a live room, applied to a server, comprising:
a fourth sending module configured to send trigger information to an anchor and an audience in the live room in response to detecting that amount of interaction data in the live room exceeds a preset threshold, wherein the trigger information is used respectively for a first terminal of an audience and a second terminal of an anchor to display an interaction control on a live streaming interface of the live room;
a fifth sending module configured to send first interaction data sent by the first terminal to the anchor, wherein the first interaction data comprises interaction data obtained by the audience through a first interaction panel, and the first interaction panel is an interaction panel displayed in response to the audience triggering a first interaction control;
a receiving module configured to receive a first time stamp and a second time stamp sent by the second terminal, wherein the first time stamp and the second time stamp comprises time points at which the anchor triggers a second target control two times in succession, and wherein the second target control is associated with the first interaction data displayed on a second interaction panel, and the second interaction panel is an interaction panel displayed in response to the anchor triggering a second interaction control;
a generation module configured to generate a target video based on the first time stamp and the second time stamp, wherein the target video comprises a livestream video recorded by the anchor during a time period between the first time stamp and the second time stamp; and
a sixth sending module configured to send the target video to the audience.

14. The apparatus according to claim 13, wherein the generation module is specifically configured to obtain the livestream video recorded during the time period between the first time stamp and the second time stamp by editing a livestream video recorded by the anchor based on the first time stamp and the second time stamp; and use the livestream video recorded during the time period between the first time stamp and the second time stamp as the target video.

15. A first terminal, comprising:
a first processor; and
a first memory for storing instructions executable by the first processor;
wherein the first processor is configured to execute the instructions to implement following steps:
displaying a first interaction control on a first live streaming interface of the live room in response to obtaining trigger information sent by a server, wherein the trigger information indicates that amount of interaction data in the live room exceeds a preset threshold;
displaying a first interaction panel on the first live streaming interface in response to receiving a trigger operation on the first interaction control, wherein the first interaction panel is used for an interaction between an audience and an anchor;
sending first interaction data to the anchor and displaying the first interaction data on the first interaction panel in response to obtaining the first interaction data from the audience through the first interaction panel;
displaying a first target control in response to receiving a target video sent by the server, wherein the target video includes an interaction video provided by the anchor for the first interaction data, and the first target control is associated with the target video; and
switching to a playback interface for the target video in response to receiving a trigger operation on the first target control.

16. A second terminal, comprising:
a second processor; and
a second memory for storing instructions executable by the second processor;
wherein the second processor is configured to execute the instructions to implement following steps:
displaying a second interaction control on a second live streaming interface of the live room in response to obtaining trigger information sent by a server, wherein the trigger information indicates that amount of interaction data in the live room exceeds a preset threshold;
displaying a second interaction panel on the second live streaming interface in response to receiving a trigger operation on the second interaction control, wherein the second interaction panel is used to display first interaction data generated during a livestream in the live room, and the first interaction data is associated with a second target control;
sending a first time stamp to the server in response to receiving a first trigger operation on the second target control; and
sending a second time stamp to the server in response to receiving a second trigger operation on the second target control;
wherein a livestream video recorded by an anchor during a time period between the first time stamp and the second time stamp is used as an interaction video for the first interaction data.

17. A server, comprising:
a third processor; and
a third memory for storing instructions executable by the third processor;
wherein the third processor is configured to execute the instructions to implement following steps:
sending trigger information to an anchor and an audience in the live room in response to detecting that amount of interaction data in the live room exceeds a preset threshold, wherein the trigger information is used respectively for a first terminal of an audience and a second terminal of an anchor to display an interaction control on a live streaming interface of the live room;
sending first interaction data sent by the first terminal to the anchor, wherein the first interaction data comprises interaction data obtained by the audience through a first interaction panel, and the first interaction panel is an interaction panel displayed in response to the audience triggering a first interaction control;
receiving a first time stamp and a second time stamp sent by the second terminal, wherein the first time stamp and the second time stamp comprises time points at which the anchor triggers a second target control two times in succession, and wherein the second target control is associated with the first interaction data displayed on a second interaction panel, and the second interaction panel is an interaction panel displayed in response to the anchor triggering a second interaction control;
generating a target video based on the first time stamp and the second time stamp, wherein the target video comprises a livestream video recorded by the anchor during a time period between the first time stamp and the second time stamp; and
sending the target video to the audience.

18. A storage medium having instructions stored, which when executed by a processor of an electronic device, enables the electronic device to implement following steps:
displaying a first interaction control on a first live streaming interface of the live room in response to obtaining trigger information sent by a server, wherein the trigger information indicates that amount of interaction data in the live room exceeds a preset threshold;
displaying a first interaction panel on the first live streaming interface in response to receiving a trigger operation on the first interaction control, wherein the first interaction panel is used for an interaction between an audience and an anchor;
sending first interaction data to the anchor and displaying the first interaction data on the first interaction panel in response to obtaining the first interaction data from the audience through the first interaction panel;
displaying a first target control in response to receiving a target video sent by the server, wherein the target video includes an interaction video provided by the anchor for the first interaction data, and the first target control is associated with the target video; and
switching to a playback interface for the target video in response to receiving a trigger operation on the first target control.

19. A storage medium having instructions stored, which when executed by a processor of an electronic device, enables the electronic device to implement following steps:
displaying a second interaction control on a second live streaming interface of the live room in response to obtaining trigger information sent by a server, wherein the trigger information indicates that amount of interaction data in the live room exceeds a preset threshold;
displaying a second interaction panel on the second live streaming interface in response to receiving a trigger operation on the second interaction control, wherein the second interaction panel is used to display first interaction data generated during a livestream in the live room, and the first interaction data is associated with a second target control;
sending a first time stamp to the server in response to receiving a first trigger operation on the second target control; and
sending a second time stamp to the server in response to receiving a second trigger operation on the second target control;
wherein a livestream video recorded by an anchor during a time period between the first time stamp and the second time stamp is used as an interaction video for the first interaction data.

20. A storage medium having instructions stored, which when executed by a processor of an electronic device, enables the electronic device to implement following steps:
sending trigger information to an anchor and an audience in the live room in response to detecting that amount of interaction data in the live room exceeds a preset threshold, wherein the trigger information is used respectively for a first terminal of an audience and a second terminal of an anchor to display an interaction control on a live streaming interface of the live room;
sending first interaction data sent by the first terminal to the anchor, wherein the first interaction data comprises interaction data obtained by the audience through a first interaction panel, and the first interaction panel is an interaction panel displayed in response to the audience triggering a first interaction control;
receiving a first time stamp and a second time stamp sent by the second terminal, wherein the first time stamp and the second time stamp comprises time points at which the anchor triggers a second target control two times in succession, and wherein the second target control is associated with the first interaction data displayed on a second interaction panel, and the second interaction panel is an interaction panel displayed in response to the anchor triggering a second interaction control;
generating a target video based on the first time stamp and the second time stamp, wherein the target video comprises a livestream video recorded by the anchor during a time period between the first time stamp and the second time stamp; and
sending the target video to the audience.
